# EUROPÄISCHE PATENTANMELDUNG

(11) **EP 3 816 850 A1**
(43) Veröffentlichungstag der Anmeldung: **05.05.2021**
(21) Anmeldenummer: 20198121.4
(22) Anmeldetag: 24.09.2020
(51) Int. Cl.: G06K 9/00

(54) **VERFAHREN ZUR KLASSIFIZIERUNG EINES UNTERGRUNDS**

(30) Priorität: 29.10.2019 DE 102019216618
(71) Anmelder: Deere & Company, Moline, IL 61265 (US)
(72) Erfinder: Schmidt, Martin, 68163 Mannheim (DE); Fritz, Norbert, 68163 Mannheim (DE); Schlegel, Simone, 68163 Mannheim (DE)
(74) Vertreter: Dehnhardt, Florian Christopher

(57) **Zusammenfassung**

Die Erfindung betrifft ein Verfahren zur Klassifizierung eines von einem landwirtschaftlichen Nutzfahrzeug (12) befahrenen Untergrundes (A1 - D3). Dabei wird ein Ausschnitt einer Oberfläche (18) des Untergrundes (A1 - D3) in Form von optischen Daten (BD) erfasst. Die optischen Daten (BD) werden in einer Datenverarbeitungseinheit (20) bezüglich unterschiedlicher Untergrund-Klassen (A, B, C, D) klassifiziert. Anhand der Klassifizierung wird eine Untergrund-Klasse (A, B, C, D) ermittelt. Ausgangsdaten der Datenverarbeitungseinheit (20) repräsentieren die ermittelte Untergrund-Klasse (A, B, C, D) als Klassifizierungsergebnis (KE).

## Beschreibung

Die Erfindung betrifft ein Verfahren zur Klassifizierung eines Untergrunds, den ein landwirtschaftliches Nutzfahrzeug für seinen Fahrbetrieb benutzt.

Während des Fahrbetriebes und Arbeitseinsatzes wechselt bei landwirtschaftlichen Nutzfahrzeugen immer wieder die Qualität des befahrenen Untergrundes. Der Fahrzeugführer versucht dann, die Fahrweise des Nutzfahrzeuges entsprechend anzupassen.

Der vorliegenden Erfindung liegt die Aufgabe zugrunde, die Fahrweise eines landwirtschaftlichen Nutzfahrzeuges möglichst effizient an den jeweiligen Untergrund anzupassen.

Diese Aufgabe wird durch ein Verfahren mit den Merkmalen des Patentanspruchs 1 gelöst.

Weitere vorteilhafte Ausgestaltungen des erfindungsgemäßen Verfahrens gehen aus den Unteransprüchen hervor.

Gemäß Patentanspruch 1 wird mittels des Verfahrens ein Untergrund klassifiziert, der von einem landwirtschaftlichen Nutzfahrzeug befahren wird. Dabei wird ein Ausschnitt einer Oberfläche des Untergrunds in Form von optischen Daten erfasst. Diese optischen Daten werden einer Datenverarbeitungseinheit zugeführt und dort insbesondere mittels spezifischer Algorithmen verarbeitet und dabei bezüglich unterschiedlicher Untergrund-Klassen klassifiziert. Anhand der Klassifizierung wird eine zutreffende Untergrund-Klasse ermittelt. Die ermittelte Untergrund-Klasse ist ein Klassifizierungsergebnis, welches durch Ausgangsdaten der Datenverarbeitungseinheit repräsentiert wird.

Durch dieses Verfahren wird ein technisches Hilfsmittel zur hinreichend genauen Erkennung bzw. Klassifizierung des befahrenen Untergrundes bereitgestellt. Das Klassifizierungsergebnis selbst in Form von Ausgangsdaten der Datenverarbeitungseinheit bildet eine vorteilhafte Ausgangsbasis für Maßnahmen, die beispielsweise von einer Steuereinheit automatisch veranlasst werden können. Dies können z.B. technische Maßnahmen an dem Nutzfahrzeug sein, um dessen Fahrbetrieb automatisch optimal an den erkannten Untergrund anzupassen. Insoweit bietet das Verfahren auch eine Assistenz- und Komfortfunktion für den Fahrer bzw. Benutzer, so dass er während des Fahrbetriebs und Arbeitseinsatzes erheblich entlastet wird. Eine derartige automatische Anpassung des Fahrzeugs an den jeweiligen Untergrund wirkt außerdem kraftstoffsparend und verschleißreduzierend.

Vorzugsweise ist eine optische Sensorik derart ausgebildet, dass der jeweilige Oberflächen-Ausschnitt des Untergrundes in Form von Bilddaten optisch erfasst wird. Diese Daten lassen sich technisch einfach verarbeiten und bieten eine breit gestreute Messfläche. Außerdem ermöglichen die Bilddaten eine hohe Genauigkeit und hohe Datenplausibilität, was die Qualität der Klassifizierungsergebnisse unterstützt.

In einer bevorzugten Ausführungsform enthält die Datenverarbeitungseinheit mindestens ein neuronales Netzwerk, so dass die optischen Daten einerseits zuverlässig mit hoher Genauigkeit und andererseits mit geringem technischen Aufwand verarbeitet werden können. Eine derartige künstliche Intelligenz benötigt lediglich eine spezifische Definitionsphase und eine spezifische Lernphase (Trainingsphase), bis diese hinreichend genaue Ausgangsdaten für eine korrekte Klassifizierung liefert und danach im Arbeitsalltag des Nutzfahrzeugs als technisches Modell bzw. Ersatz für ansonsten aufwändige technische Mittel eingesetzt werden kann. Hierdurch lassen sich neuronale Netzwerke auch vorteilhaft für eine Auswertung der verfahrensgemäßen Daten der optischen Sensorik und folglich für eine Erkennung bzw. Klassifizierung des erfassten Untergrundes anwenden.

Das mindestens eine neuronale Netzwerk und/oder die Datenverarbeitungseinheit kann auch derart ausgebildet sein, dass dieses bzw. diese auch im Praxiseinsatz des Nutzfahrzeugs (d.h. nach der ursprünglichen Lernphase vor dem Praxiseinsatz) nach Art einer sich kontinuierlich optimierenden, selbstlernenden Software arbeitet.

In einer bevorzugten Ausführungsform wird in der Datenverarbeitungseinheit ein neuronales Netzwerk eingesetzt, welches als Eingangssignale die Daten der optischen Sensorik erhält. Um die Betriebssicherheit und Zuverlässigkeit bei der Klassifizierung des Untergrundes zu unterstützen, weist die Datenverarbeitungseinheit vorzugsweise eine Prüfstufe auf, in der Daten (z.B. die Daten der optischen Sensorik, Eingangsdaten und/oder Ausgangsdaten eines neuronalen Netzwerkes) auf ihre Plausibilität hin überprüft werden. Beispielsweise erfolgt diese Überprüfung, indem die jeweiligen Daten mit vordefinierten Plausibilitätsdaten verglichen werden.

Vorzugsweise wird der erfasste Untergrund qualitativ einer spezifischen Untergrund-Klasse von mehreren möglichen Untergrund-Klassen zugeordnet. Insbesondere wird mindestens eine der folgenden beispielhaften Untergrund-Klassen für die Klassifizierung bereitgestellt:
- gepflasterter Untergrund (z.B. Pflastersteine, Teerboden, Asphalt),
- ungepflasterter Untergrund (z.B. Kies, Sand, Schotter),
- Acker bzw. Feld,
- Wiese (z.B. Grasboden, Kräuterwiese).

Hierbei können die vorstehenden Untergrund-Klassen zusätzlich unterklassifiziert sein, beispielsweise hinsichtlich einer Acker- bzw. Feldbeschaffenheit, und zwar hinsichtlich von Eigenschaften wie fest, matschig, sandig oder lehmig.

Vorteilhaft werden die optischen Daten in der Datenverarbeitungseinheit in Abhängigkeit von mindestens einem erfassten Parameter verarbeitet. Hierdurch können zusätzliche sinnvolle Kriterien im Fahrbetrieb des Nutzfahrzeugs berücksichtigt werden, um die Genauigkeit des Klassifizierungsergebnisses zu verbessern. Als Parameter ist insbesondere mindestens eine der folgenden Größen geeignet: eine Fahrgeschwindigkeit des Nutzfahrzeugs, eine Umgebungsbedingung (z.B. Wetterparameter, Sichtverhältnisse, positionsbezogene Felddaten).

Wie bereits erwähnt, kann das Klassifizierungsergebnis als Ausgangsbasis für spezifische Maßnahmen an dem Nutzfahrzeug verwendet werden. Insbesondere kann hierbei ein spezifisches technisches Merkmal des Nutzfahrzeugs automatisch angepasst werden, um dessen Fahrbetrieb automatisch optimal an den identifizierten Untergrund anzupassen. Vorzugsweise wird mindestens eines der folgenden technischen Merkmale des Nutzfahrzeugs angepasst: der Reifendruck mindestens eines Rades, eine Getriebeübersetzung, eine Motordrehzahl des Verbrennungsmotors, der Betätigungszustand eines zuschaltbaren Vorderachsantriebs bzw. einer schaltbaren Differentialsperre (wozu ferner Informationen eines Lenkwinkels sowie der Fahrgeschwindigkeit ausgewertet werden).

Die Anpassung der vorgenannten technischen Merkmale erfolgt vorzugsweise automatisch mittels einer geeigneten Steuereinheit, welche abhängig von dem Klassifizierungsergebnis automatisch eine definierte Maßnahme auslöst. Alternativ kann die definierte Maßnahme dem Fahrer bzw. Benutzer als vorgeschlagene Handlungsmaßnahme signalisiert werden (z.B. an einem Bildschirm oder einer Benutzerschnittstelle). Die vorgeschlagene Maßnahme kann dann manuell durch den Fahrer bzw. Benutzer ausgelöst werden.

Eine Anordnung zur Klassifizierung eines von einem landwirtschaftlichen Nutzfahrzeug befahrenen Untergrundes weist eine optische Sensorik und eine geeignete Datenverarbeitungseinheit auf.

Die optische Sensorik (z.B. mindestens eine Kamera) dient einer optischen Erfassung eines Ausschnittes einer Oberfläche des Untergrundes in Form von optischen Daten. Die optische Sensorik wird an einer Stelle (oder verteilt an mehreren Stellen) des Nutzfahrzeugs derart angeordnet, dass diese eine freie Sicht auf den Untergrund hat. Dabei ist die optische Sensorik vorzugsweise an einem Außenbereich einer Fahrzeugkabine montiert. Die optische Sensorik ist beispielsweise auf den Untergrund in Fahrtrichtung vor dem Nutzfahrzeug gerichtet (z.B. Frontkamera). Alternativ oder zusätzlich ist die optische Sensorik auf den Untergrund neben dem Fahrzeug (z.B. Seitenkamera) gerichtet.

Die Datenverarbeitungseinheit der Anordnung kann in einer Steuereinheit des Nutzfahrzeugs implementiert sein, welche die für eine Daten- bzw. Signalverarbeitung erforderlichen Teileinheiten wie etwa Lese- und/oder Schreibeinheit, Speichereinheit, Prozessor enthält. Die Steuereinheit kann physisch voneinander getrennte Teileinheiten aufweisen oder als ein einziger Block am Nutzfahrzeug angeordnet sein. Die vorgenannten optischen Daten werden in der Datenverarbeitungseinheit verarbeitet und bezüglich unterschiedlicher Untergrund-Klassen klassifiziert. Anhand der Klassifizierung ermittelt die Datenverarbeitungseinheit eine zutreffende Untergrund-Klasse. Daraus generiert die Datenverarbeitungseinheit Ausgangsdaten, welche die ermittelte Untergrund-Klasse als ein Klassifizierungsergebnis repräsentieren.

Bei dem landwirtschaftlichen Nutzfahrzeug handelt es sich insbesondere um einen Traktor bzw. Schlepper.

Das erfindungsgemäße Verfahren wird im Folgenden anhand der beigefügten Zeichnung näher erläutert. Die einzige Figur zeigt eine blockschaltbildartig und schematisch dargestellte Anordnung mit Bestandteilen zur Durchführung des erfindungsgemäßen Verfahrens.

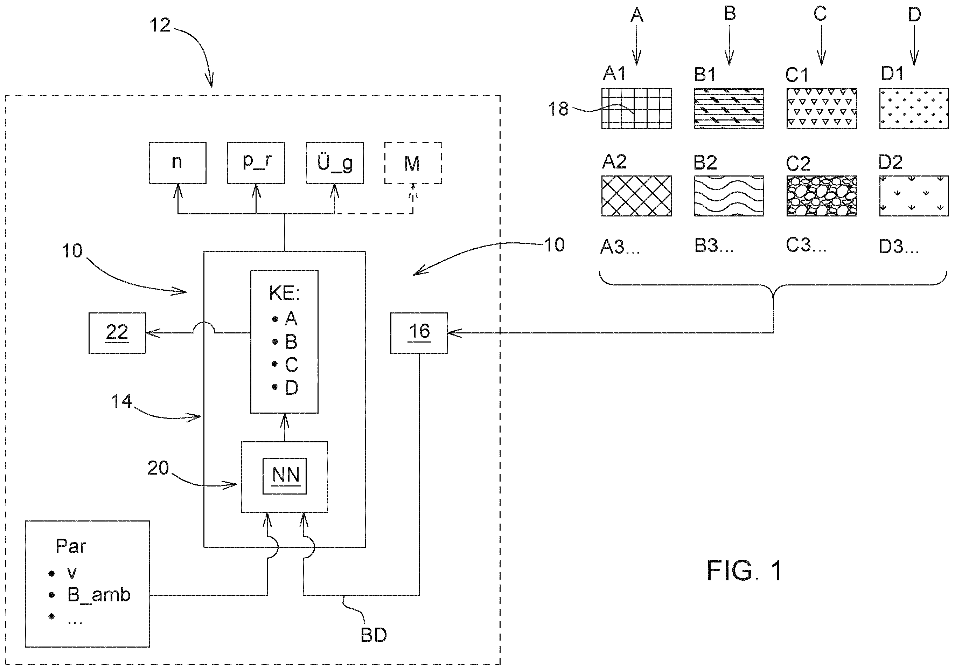

Fig. 1 zeigt eine Anordnung 10 mit mehreren Bestandteilen zur Erfassung und Klassifizierung eines von einem landwirtschaftlichen Nutzfahrzeug 12, insbesondere eines Traktors, befahrenen Untergrundes. Die Anordnung 10 ist fahrzeugseitig angeordnet und weist u.a. eine Steuereinheit 14 sowie eine optische Sensorik 16 (z.B. eine Kamera) auf. Die optische Sensorik 16 ist an einer (oder mehreren) geeigneten Position(en) des Nutzfahrzeugs 12 befestigt, vorzugsweise im frontseitigen Bereich des Nutzfahrzeugs 12 (z.B. an einem Außenbereich seiner Fahrzeugkabine) .

Die Steuereinheit 14 enthält die für eine Signal- bzw. Datenverarbeitung erforderlichen Teileinheiten wie etwa Lese- und/oder Schreibeinheit, Speichereinheit und Prozessor. Die Steuereinheit 14 kann physisch voneinander getrennte Teileinheiten aufweisen oder als ein einziger Block im Nutzfahrzeug 12 implementiert sein.

Die optische Sensorik 16 erfasst einen Ausschnitt einer Oberfläche eines von dem Nutzfahrzeug 12 befahrenen Untergrundes. Beispielsweise wird ein Ausschnitt der Oberfläche 18 eines gepflasterten Untergrundes A1 erfasst. Der gepflasterte Untergrund A1 unterscheidet sich von weiteren gepflasterten Untergründen, die im Fahrbetrieb des Nutzfahrzeugs 12 vorkommen können. Hierbei sind die Untergründe A1, A2, A3 lediglich stellvertretend für eine unbestimmte Anzahl unterschiedlich möglicher gepflasterter Untergründe (z.B. asphaltierte Straße, Teerboden, unterschiedliche Steinpflaster) dargestellt. Analog können Oberflächen unterschiedlicher ungepflasterter Untergründe (z.B. Schotterweg, Kiesweg, Sandweg) als B1, B2, B3 usw. erfasst werden. Ebenso können unterschiedlich strukturierte Ackerflächen C1, C2, C3 usw. sowie unterschiedlich strukturierte Wiesenflächen D1, D2, D3 usw. erfasst werden.

Die Steuereinheit 14 empfängt Sensorsignale der optischen Sensorik 16. Diese Sensorsignal werden als Rohdaten bzw. Bilddaten BD an die Steuereinheit 14 gesendet. Aus den empfangenen Bilddaten BD ermittelt eine Datenverarbeitungseinheit 20 eine Untergrund-Klasse (z.B. A, B, C oder D), der der erfasste Oberflächenausschnitt eines Untergrundes (z.B. A1 bis D3) zugeordnet wird. Die Datenverarbeitungseinheit 20 sendet Ausgangsdaten, welche die ermittelte Untergrund-Klasse A oder B oder C oder D als Klassifizierungsergebnis repräsentieren.

Für die Klassifizierung wird in der Datenverarbeitungseinheit 20 ein neuronales Netzwerk NN verwendet. Nach einer Definitions- und Einlernphase stellt dieses ein softwarebasiertes Modell zur korrekten Ermittlung der Untergrund-Klasse dar, auf der der Fahrbetrieb des Nutzfahrzeuges 12 aktuell stattfindet. Vorzugsweise sind die Datenverarbeitungseinheit 20 und das neuronale Netzwerk NN derart ausgebildet, dass auch während des Fahrbetriebes auf Basis der empfangenen Bilddaten BD und Parameterdaten Par eine kontinuierliche Optimierung des Modells (selbstlernende Software) erfolgt.

Vorzugsweise wird bei der Verarbeitung der optischen Daten auch mindestens ein Parameter Par berücksichtigt. Beispielsweise sind ein Erfassung der Fahrgeschwindigkeit v des Nutzfahrzeugs 12 und/oder mindestens eine Umgebungsbedingung B_amb (z.B. Lufttemperatur, Helligkeitsgrad, Sichtverhältnisse, positionsbezogene Felddaten) vorteilhaft, um die Genauigkeit bei der Klassifizierung zu erhöhen. Der jeweilige Parameterwert kann durch eine geeignete Sensorik ermittelt werden oder steht beispielsweise über einen Datenbus (z.B. CAN) bereits zur Verfügung. Der Wert des jeweiligen Parameters Par wird als Eingangssignal an die Datenverarbeitungseinheit 20 gesendet.

Das Klassifizierungsergebnis KE wird mittels einer Anzeigeeinheit 22 dem Fahrer bzw. Benutzer signalisiert. Auf dieser Informationsbasis kann der Fahrer bzw. Benutzer dann manuell eine Maßnahme auslösen, um das Nutzfahrzeug 12, insbesondere dessen Fahrbetrieb, an die ermittelte Untergrund-Klasse A, B, C oder D anzupassen.

Darüber hinaus wird das Klassifizierungsergebnis KE dazu genutzt, mindestens ein technisches Merkmal des Nutzfahrzeugs 12 automatisch anzupassen. Beispielsweise wird mittels der Steuereinheit 14 die Motordrehzahl n eines Verbrennungsmotors des Nutzfahrzeugs 12 und/oder der Reifendruck n eines Reifens und/oder eine Getriebeübersetzung Ü_g automatisch angepasst. Die Anpassung weiterer Merkmale M ist denkbar, wie in der Zeichnung gestrichelt angedeutet. Zu diesen optionalen Merkmalen gehört der Betätigungszustand eines zuschaltbaren Vorderachsantriebs bzw. einer schaltbaren Differentialsperre.

## Patentansprüche

1. Verfahren zur Klassifizierung eines von einem landwirtschaftlichen Nutzfahrzeug (12) befahrenen Untergrundes (A1 - D3), wobei
- ein Ausschnitt einer Oberfläche (18) des Untergrundes (A1 - D3) in Form von optischen Daten (BD) erfasst wird,
- die optischen Daten (BD) in einer Datenverarbeitungseinheit (20) bezüglich unterschiedlicher Untergrund-Klassen (A, B, C, D) klassifiziert werden,
- anhand der Klassifizierung eine Untergrund-Klasse (A, B, C, D) ermittelt wird, und
- Ausgangsdaten der Datenverarbeitungseinheit (20) die ermittelte Untergrund-Klasse (A, B, C, D) als Klassifizierungsergebnis (KE) repräsentieren.

2. Verfahren nach Anspruch 1, **gekennzeichnet durch** Bilddaten (BD) als optische Daten.

3. Verfahren nach Anspruch 1 oder 2, **dadurch gekennzeichnet, dass** die Datenverarbeitungseinheit (20) mindestens ein neuronales Netzwerk (NN) zur Verarbeitung der optischen Daten (BD) enthält.

4. Verfahren nach einem der vorhergehenden Ansprüche, **dadurch gekennzeichnet, dass** mindestens eine der folgenden Untergrund-Klassen vorgesehen ist:
gepflasterter Untergrund (A), ungepflasterter Untergrund (B), Acker (C), Wiese (D).

5. Verfahren nach einem der vorhergehenden Ansprüche, **dadurch gekennzeichnet, dass** die optischen Daten (BD) in der Datenverarbeitungseinheit (20) in Abhängigkeit von mindestens einem erfassten Parameter (Par) verarbeitet werden.

6. Verfahren nach Anspruch 5, **dadurch gekennzeichnet, dass** als mindestens ein Parameter (Par) mindestens eine der folgenden Größen vorgesehen ist:
- eine Fahrgeschwindigkeit (v) des Nutzfahrzeugs (12),
- eine Umgebungsbedingung (B_amb),
- positionsbezogene Felddaten.

7. Verfahren nach einem der vorhergehenden Ansprüche, **dadurch gekennzeichnet, dass** in Abhängigkeit von dem Klassifizierungsergebnis (KE) ein technisches Merkmal (n, p_r, Ü_g, M) des Nutzfahrzeugs (12) angepasst wird.

8. Verfahren nach Anspruch 7, **dadurch gekennzeichnet, dass** mindestens eines der folgenden technischen Merkmale angepasst wird:
- Reifendruck (p_r),
- Getriebeübersetzung (Ü_g),
- Motordrehzahl (n),
- Betätigungszustand eines zuschaltbaren Vorderachsantriebs,
- Betätigungszustand einer schaltbaren Differentialsperre.

9. Anordnung (10) zur Klassifizierung eines von einem landwirtschaftlichen Nutzfahrzeug (12) befahrenen Untergrundes (A1 - D3), mit
- einer optischen Sensorik (16) zur optischen Erfassung eines Ausschnittes einer Oberfläche (18) des Untergrunds (A1 - D3) in Form von optischen Daten (BD), und
- einer Datenverarbeitungseinheit (20) zur Klassifizierung der optischen Daten (BD) bezüglich unterschiedlicher Untergrund-Klassen (A, B, C, D) und zur Ausgabe von Ausgangsdaten, welche eine anhand der Klassifizierung ermittelte Untergrund-Klasse (A, B, C, D) als Klassifizierungsergebnis (KE) repräsentieren.
